# EUROPEAN PATENT APPLICATION

(11) **EP 4 617 045 A1**
(43) Date of publication of application: **17.09.2025**
(21) Application number: 23905458.8
(22) Date of filing: 30.10.2023
(51) Int. Cl.: B29C 70/30, B29C 70/54

(54) **PULTRUSION-WINDING FORMING METHOD**

(30) Priority: 21.12.2022 CN 202211647398
(71) Applicant: Jiangsu Shemar Electric Co., Ltd., Nantong City, Jiangsu 226017 (CN)
(72) Inventor: GUO, Qiang, Nantong, Jiangsu 226017 (CN); LIU, Chao, Nantong, Jiangsu 226017 (CN); ZHANG, Linjun, Nantong, Jiangsu 226017 (CN); SUN, Yinjian, Nantong, Jiangsu 226017 (CN)
(74) Representative: Mewburn Ellis LLP
(86) International application number: PCT/CN2023/127735
(87) International publication number: WO 2024/131286

(57) **Abstract**

A pultrusion-winding forming method, which is used for manufacturing a pultrusion-winding product. The method comprises the following steps: S101, after several yarns are impregnated with a resin glue solution, pultruding and winding the several yarns outside a mandrel to form an axial layer and a wound layer to obtain a prefabricated member of a pultrusion-winding product; S102, curing the prefabricated member at high temperature to form the pultrusion-winding product, and pulling the pultrusion-winding product to move in the forming advance direction of the pultrusion-winding product, thereby continuously forming the pultrusion-winding product; and S103, detecting a position signal of the pultrusion-winding product, and cutting the pultrusion-winding product according to a preset length. The pultrusion-winding product prepared by the pultrusion-winding forming method of the present application has both good circumferential strength and axial strength, can bear a circumferential acting force and an axial acting force simultaneously, and has excellent mechanical properties. In addition, the pultrusion-winding forming method involves a simple process and has high production efficiency.

## Description

### TECHNICAL FIELD

The present application relates to the field of composite material forming, and more particularly, to a pultrusion-winding forming method.

### BACKGROUND

At present, in a pultrusion-winding forming device for composite materials, a winding is generally performed in such a way that a mechanism with a turntable provided on an integral frame is used, and fibers impregnated with a resin glue are wound on a core mold. However, on the one hand, since the core mold and the turntable are both fixed on the integral frame, forces applied to the core mold during the forming process cause a vibration of the integral frame, thereby affecting a stability of a yarn guide assembly on the turntable, causing a fiber layer wound on a surface of the core mold to shift, and reducing the product quality; on the other hand, since the core mold is too long, multiple tools are needed to thread/remove the core mold into/from the turntable, which results in cumbersome operation and low working efficiency. In addition, in a manufacturing process of pultrusion-winding products, the continuously formed products need to be cut during a pultrusion process to form products with the required lengths. At present, manual measurements and manual cuttings are adopted. The manual measurements have problems such as poor accuracy, need for secondary measurement, and low efficiency. Furthermore, since the product is in a state of constant movement, it cannot be guaranteed that a cutting machine and the product remain relatively still during cutting, which leads to problems such as delamination and burrs on a cutting surface, thus requiring secondary trimming, which further leads to low efficiency and high waste.

### SUMMARY

In view of shortcomings of prior art, one of purposes of the present application is to provide a pultrusion-winding forming method, by which a prepared pultrusion-winding product has good circumferential strength and axial strength, so that the prepared pultrusion-winding product can withstand circumferential forces and axial forces at the same time, has excellent mechanical properties, a simple process and high production efficiency.

In order to solve the above problems, the present application provides a pultrusion-winding forming method for manufacturing a pultrusion-winding product, and the method includes the following steps. In step S101, after being impregnated with a resin glue, a plurality of yarns are pultruded and wound outside the core mold to form an axial layer and a winding layer, so as to obtain a preform for the pultrusion-winding product; in step S102, the preform is cured at high temperature to form the pultrusion-winding product, the pultrusion-winding product is pulled to move along a forming forward direction of the pultrusion-winding product, so as to continuously form the pultrusion-winding product; and in step S103, a position signal of the pultrusion-winding product is detected and the pultrusion-winding product is cut according to a preset length.

In the step S101, an impregnating temperature of the resin glue is in a range from 30°C to 40°C.

In the step S101, an inner axial layer is formed by pultruding outside the core mold, and the winding layer is formed by winding outside the inner axial layer.

A winding angle of the winding layer is in a range from 45° to 90°.

A winding speed of the winding layer is in a range from 1r/min to 12r/min.

The method further includes a step S10 after the step S101. In the step S10, an outer axial layer is formed by pultruding outside the winding layer, so as to obtain the preform.

The method further includes a step S11 before the step S101, and in the step S11, a lining layer is formed by wrapping a felt cloth around outside the core mold; and/or the method further includes a step S12 after the step S101, and in the step S12, an outer felt layer is formed by wrapping a felt cloth around outside the winding layer, so as to obtain the preform.

In the step S102, the preform is fed into a forming device for curing and forming. The forming device is provided with a heating zone, a forming zone, and a post-curing zone along the forming forward direction. The preform passes through the heating zone, the forming zone, and the post-curing zone in sequence for curing and forming.

A temperature of the heating zone is in a range from 100°C to 140°C, a temperature of the forming zone is in a range from 140°C to 180°C, and a temperature of the post-curing zone is in a range from 180°C to 200°C.

In the step S102, a pulling speed is in a range from 10mm/min to 100mm/min.

In the step S101, the preform is prepared by a winding forming device, and the winding forming device includes: a frame, a glue impregnating device for impregnating the yarns, a core mold fixing device for fixing the core mold, and two winding devices for winding the yarns on the core mold. The glue impregnating device, the core mold fixing device, and the winding devices are arranged in sequence along a length direction of the frame, and the two winding devices are arranged opposite to each other along the length direction of the frame and rotatable in opposite directions, so as to realize a bidirectional winding of the yarns to form the winding layer.

The winding forming device further includes a plurality of height-adjustable supporting devices, which are arranged below the core mold along a width direction of the frame. Before the step S101, the core mold is supported by the supporting devices, and the core mold is threaded into the winding devices and fixed on the core mold fixing device.

The beneficial effects of the present application are as follows. The pultrusion-winding forming method according to the present application has a simple process and high production efficiency, and the pultrusion-winding product prepared by the method according to the present application has a good circumferential strength and axial strength, so that the prepared pultrusion-winding product can withstand circumferential forces and axial forces at the same time, has excellent mechanical properties.

### BRIEF DESCRIPTION OF THE DRAWINGS

In order to more clearly illustrate the solutions in the embodiments of the present application, the following briefly illustrates the drawings required in the description of the embodiments. Obviously, the drawings described below are only some embodiments of the present application. For those skilled in the art, other drawings can be obtained based on these drawings without creative work.
FIG. 1 is a schematic structural diagram of a winding forming device 100 in an embodiment of the present application;
FIG. 2 is a schematic structural diagram of a glue impregnating device 120 in an embodiment of the present application;
FIG. 3 is a schematic structural diagram of a core mold fixing device 130 in an embodiment of the present application;
FIG. 4 is a schematic structural diagram of a winding device 140 in an embodiment of the present application;
FIG. 5 is an enlarged schematic diagram of the area A in FIG. 4;
FIG. 6 is a schematic structural diagram of a supporting device 150 in an embodiment of the present application;
FIG. 7 is a schematic structural diagram of a felt laying device 160 in an embodiment of the present application;
FIG. 8 is a schematic structural diagram of a glue recovery tank 171 in an embodiment of the present application;
FIG. 9 is a schematic structural diagram of a cutting device 200 in an embodiment of the present application;
FIG. 10 is an enlarged schematic diagram of the area B in FIG. 9; and
FIG. 11 is a schematic structural diagram of a cutting mechanism 230 in an embodiment of the present application.

### DETAILED DESCRIPTION OF THE EMBODIMENTS

The following will provide a clear and complete description of the solutions in the embodiments of the present application, based on the accompanying drawings. Obviously, the described embodiments are only a part of the embodiments of the present application, not all of them. Based on the embodiments in the present application, all other embodiments obtained by those skilled in the art without creative work are within the protection scope of the present application.

In an embodiment, a pultrusion-winding forming production line is provided for manufacturing a pultrusion-winding product. Along a forming forward direction of the pultrusion-winding product, the pultrusion-winding forming production line sequentially includes a yarn laying device for placing a yarn; a winding forming device 100 for winding the yarn; a forming device for curing the resin-impregnated yarn into the pultrusion-winding product; a pulling device for providing a pulling force, and a cutting device 200 for cutting the pultrusion-winding product.

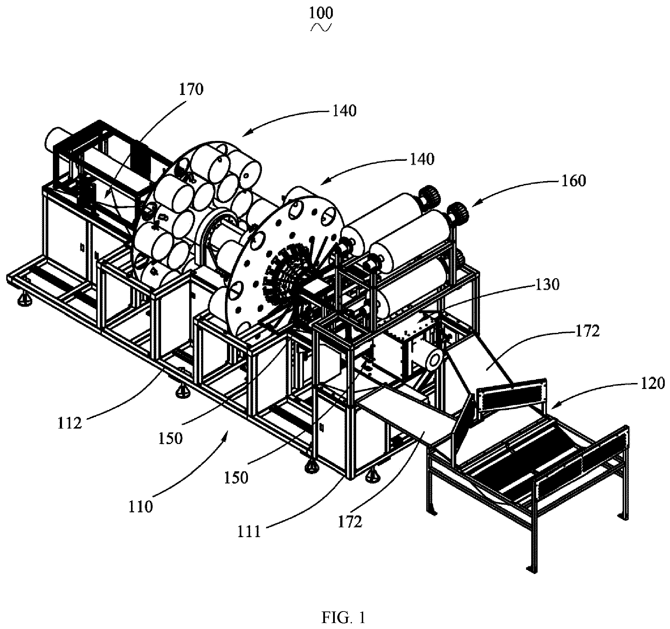

Referring to FIG. 1, the winding forming device 100 includes a frame 110 arranged horizontally, a glue impregnating device 120 for impregnating the yarn; a core mold fixing device 130 for fixing the core mold, and a winding device 140 for winding the yarn around the core mold. The glue impregnating device 120, the core mold fixing device 130, and the winding device 140 are arranged in sequence along the forming forward direction of the pultrusion-winding product. The frame 110 includes a first frame 111 and a second frame 112, the core mold fixing device 130 is horizontally arranged on the first frame 111, and the winding device 140 is vertically arranged on the second frame 112. The first frame 111 and the second frame 112 are arranged separately. The first frame 111 and the second frame 112 are respectively poured with concrete on the ground, so that the first frame 111 and the second frame 112 are respectively fixed on the ground, and are separately arranged. Compared with the prior art in which both the core mold and the turntable are fixed on the integral frame, forces applied to the core mold and the turntable during the forming process cause a vibration of the integral frame, thereby affecting a stability of a yarn guide assembly on the turntable, causing a fiber layer wound on a surface of the core mold to shift, and reducing the product quality. In the winding forming device 100 provided in the present application, the first frame 111 for fixing the core mold fixing device 130 and the second frame 112 for fixing the winding device 140 are separately arranged, so that a vibration of the winding device 140 caused by the forces applied to the core mold can be avoided, thereby avoiding the shifting of the fiber layer caused by the vibration of the winding device 140, and effectively improving a product qualification rate.

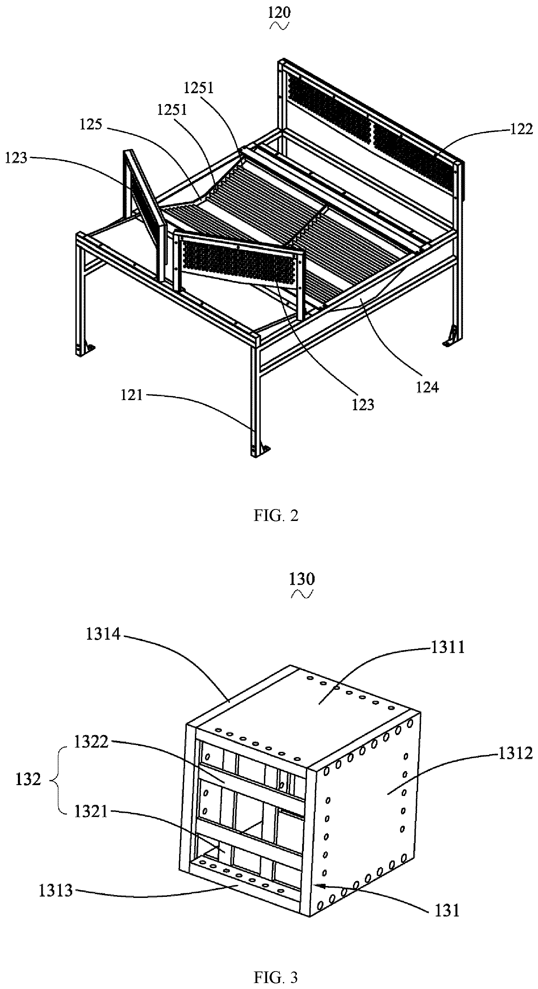

Referring to FIG. 2, the glue impregnating device 120 includes a glue impregnating frame 121, a yarn collecting plate 122, two yarn dividing plates 123, a glue impregnating tank 124, and a glue impregnating rack 125. The yarn collecting plate 122, the glue impregnating tank 124, and the two yarn dividing plates 123 are sequentially arranged on the glue impregnating frame 121 along a length direction of the frame 110, and the glue impregnating rack 125 is arranged on the glue impregnating tank 124. The yarn collecting plate 122 is vertically arranged on an end of the glue impregnating frame 121 away from the core mold fixing device 130, and a plurality of yarn collecting holes are arranged on the yarn collecting plate 122 for threading the yarn and guiding the yarn into the glue impregnating tank 124, so as to facilitate the subsequent impregnating of the yarn. The glue impregnating tank 124 is formed as a V-shaped tank, that is, the glue impregnating tank 124 is in a V-shape that is concave downward. The glue impregnating tank 124 is horizontally arranged on the glue impregnating frame 121 to accommodate the resin glue. The glue impregnating rack 125 is horizontally arranged on the glue impregnating tank 124, and the glue impregnating rack 125 is arranged in contact with an inner bottom surface of the glue impregnating tank 124. The glue impregnating rack 125 includes a plurality of glue impregnating rollers 1251, which are arranged in parallel along the length direction of the frame 110 at the bottom of the glue impregnating tank 124 to form a V-shaped glue impregnating rack 125. There is a certain gap between the plurality of glue impregnating rollers 1251 and the bottom plate of the glue impregnating tank 124. The yarn passes through the yarn collecting hole in the yarn collecting plate 122, and then passes through the gap between the plurality of glue impregnating rollers 1251 and the bottom plate of the glue impregnating tank 124 in sequence to be impregnated with the resin glue. The plurality of glue impregnating rollers 1251 can keep the yarn on the bottom of the glue impregnating tank 124 at all times, ensuring an impregnating effect of the yarn. The two yarn dividing plates 123 are vertically arranged on an end of the glue impregnating frame 121 close to the core mold fixing device 130, the two yarn dividing plates 123 are arranged facing each other at a certain angle, and an opening of the angle faces the yarn collecting plate 122. The yarn dividing plate 123 is provided with a plurality of yarn dividing holes for threading the yarn. The two yarn dividing plates 123 can divide the yarns passing through the glue impregnating tank 124 into two parts. Moreover, the opening of the angle between the two yarn dividing plates 123 faces the yarn collecting plate 122, so that the two yarns impregnated with glue can pass through the yarn dividing plates 123 toward two sides away from a center line of the core mold fixing device 130 respectively. As a result, the two yarns smoothly bypass the core mold fixing device 130 and wrap around an outer periphery of the core mold to achieve pre-forming, thereby preventing the yarns from being excessively bent, and avoiding a wear of the yarn during movement caused by excessive bending.

Furthermore, the glue impregnating tank 124 has a constant temperature heating function. By setting a suitable temperature, the resin glue in the glue impregnating tank 124 can maintain an appropriate viscosity, which is convenient for impregnating the yarn, and the following situations are avoided. The viscosity of the resin glue is too high due to the low temperature, which makes the yarn unable to be fully impregnated, thus affecting the product quality.

Referring to FIG. 1 and FIG. 3, the core mold fixing device 130 is horizontally arranged on the first frame 111 and is used to adjust and fix the core mold. The core mold fixing device 130 includes an adjustment frame 131 and an adjustment block group 132. The adjustment frame 131 includes an upper top plate 1311, a first side plate 1312, a lower top plate 1313, and a second side plate 1314 which are fixedly connected end to end in sequence, so that the adjustment frame 131 is a hollow body structure, and a cross section of an inner cavity of the adjustment frame 131 is rectangular. Referring to directions shown in FIG. 3, two sides of the adjustment frame 131 where no plate surface is provided are defined as a front side and a rear side of the adjustment frame 131 respectively, and the front side and the rear side of the adjustment frame 131 are connected through for the core mold to pass through. Two sliding grooves are provided on each of the upper top plate 1311, the first side plate 1312, the lower top plate 1313, and the second side plate 1314. The sliding grooves are arranged on the inner walls of a front side edge and a rear side edge of the adjustment frame 131, and a length direction of each of the sliding grooves is perpendicular to a central axis of the adjustment frame 131.

The upper top plate 1311 is parallel to the lower top plate 1313, and the first side plate 1312 is parallel to the second side plate 1314. The adjustment block group 132 is arranged in the adjustment frame 131, and the adjustment block group 132 includes two transverse adjustment blocks 1321 and two longitudinal adjustment blocks 1322. Short sides of two sides of the transverse adjustment block 1321 are respectively located in the sliding grooves of the upper top plate 1311 and the sliding grooves of the lower top plate 1313, and short sides of two sides of the longitudinal adjustment block 1322 are respectively located in the sliding grooves of the first side plate 1312 and the sliding grooves of the second side plate 1314. When the core mold is threaded into the adjustment frame 131, a position of the core mold can be adjusted by controlling the adjustment block group 132 to slide in the sliding grooves, and the position of the core mold can be fixed by limiting and fixing the adjustment block group 132. Since each adjustment block needs to slide in the sliding grooves and cannot interfere with each other, any two adjacent sliding grooves cannot intersect.

In this embodiment, based on the principle that the upper top plate 1311 is on the top and the lower top plate 1313 is on the bottom, the position of the core mold in the vertical direction can be adjusted by driving the longitudinal adjustment blocks 1322; the position of the core mold in the horizontal direction can be adjusted by driving the transverse adjustment blocks 1321. The core mold fixing device 130 includes a plurality of adjusting screws. A plurality of screw holes are arranged at a position on the adjusting frame 131 where the adjusting block group 132 is projected to the adjusting frame 131, that is, a plurality of screw holes are arranged at positions on the first side plate 1312 and the second side plate 1314 of the adjusting frame 131 where the transverse adjustment block 1321 is projected to the first side plate 1312 and the second side plate 1314 of the adjusting frame 131 in the horizontal direction. A plurality of screw holes are arranged at positions on the upper top plate 1311 and the lower top plate 1313 of the adjusting frame 131 where the longitudinal adjusting block 1322 is projected to the upper top plate 1311 and the lower top plate 1313 of the adjusting frame 131 in the vertical direction. The adjusting screws pass through the screw holes to drive the two transverse adjustment blocks 1321 and the two longitudinal adjusting blocks 1322 to move, thereby adjusting the position of the core mold in the horizontal and vertical directions, and the adjusting screws can make the two transverse adjustment blocks 1321 and the two longitudinal adjusting blocks 1322 closely contact the core mold, thereby fixing the core mold. The use of adjusting screws to drive the displacement of the adjusting block group 132 is simple to operate, has strong flexibility, and avoids the adjusting screws directly contacting the core mold and damaging the core mold. Each of the front side of the adjustment frame 131 and the rear side of the adjustment frame 131 is provided with one adjustment block group 132, so as to ensure a stability of the core mold adjustment and the core mold fixation.

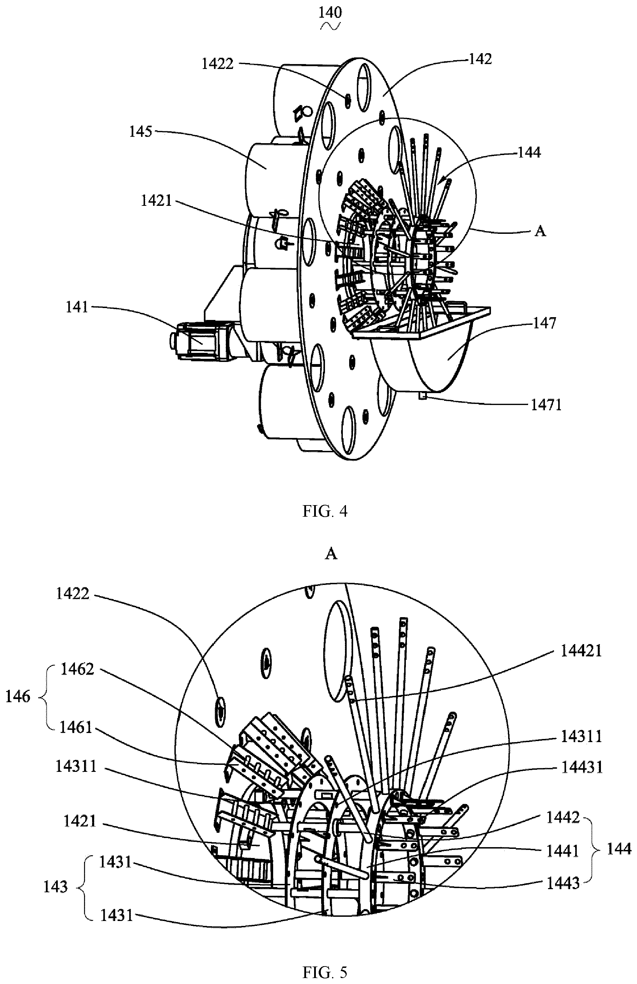

Referring to FIG. 1, FIG. 4 and FIG. 5, the winding device 140 is vertically arranged on the second frame 112, and is used to wind the yarn around the outer periphery of the core mold. The winding device 140 includes a winding motor 141, a winding disc 142, a yarn guide assembly 143, and a winding claw 144, which are sequentially sleeved on the outer periphery of the core mold along the length direction of the frame 110. Each of the winding disc 142, the yarn guide assembly 143, and the winding claw 144 is provided with a plurality of yarn guide holes and the yarn guide holes of the winding disc 142, the yarn guide assembly 143, and the winding claw 144 correspond to each other. The yarn passes through the yarn guide holes in the winding disc 142, the yarn guide assembly 143, and the winding claw 144 in sequence. The winding motor 141 drives the winding device 140 to rotate, thereby winding the yarn around the outer periphery of the core mold. The winding disc 142, the yarn guide assembly 143 and the winding claw 144 cooperate with each other to increase a tension of the yarn, which avoids the yarn from loosening and shifting due to insufficient tension when the yarn is wound around the outer periphery of the core mold, thereby affecting the product quality.

The winding motor 141 is a servo motor, which can accurately control a rotation speed of the winding device 140, so that the yarn can be wound around the outer periphery of the core mold with a stable winding tension and winding speed after passing through the winding disc 142, the yarn guide assembly 143, and the winding claw 144 in sequence.

The winding disc 142 has a disc-shaped structure, and a winding through hole 1421 is provided in a center of the winding disc 142 for threading the core mold. A plurality of yarn drums 145 are provided on the winding disc 142 for accommodating fiber yarn rolls. The plurality of yarn drums 145 are evenly distributed on a side of the winding disc 142 around the winding through hole 1421 in a circumferential direction, and an axis of each of the yarn drums 145 is perpendicular to a disc surface of the winding disc 142. The winding disc 142 is further provided with a plurality of first yarn guide holes 1422, which correspond to the center of the plurality of yarn drums 145 one by one, and are used for threading and leading the yarn in the fiber yarn roll. The yarn guide assembly 143 is located on another side of the winding disc 142, and includes two yarn guide plates 1431 which are sleeved in parallel on the outer periphery of the core mold. The yarn guide plate 1431 is an annular plate. A plurality of second yarn guide holes 14311 are provided on the yarn guide plate 1431. The plurality of second yarn guide holes 14311 are evenly distributed around the center of the yarn guide plate 1431 in a circumferential direction. The second yarn guide holes 14311 in the two yarn guide plates 1431 are coaxially arranged in a one-to-one correspondence, and correspond to the plurality of first yarn guide holes 1422 one by one. The winding claw 144 includes a winding frame 1441, a plurality of winding rods 1442, and a plurality of winding members 1443. The winding frame 1441 has a circular ring structure and is sleeved on the outer periphery of the core mold. The winding rods 1442 are arranged on an outer side of the winding frame 1441 along a radial direction of the winding frame 1441. The plurality of winding rods 1442 are evenly distributed around a center of the winding frame 1441 in a circumferential direction. An end of each of the winding rods 1442 away from the winding frame 1441 is provided with at least one third yarn guide hole 14421, which is arranged corresponding to the first yarn guide hole 1422 and the second yarn guide hole 14311. The winding member 1443 is an L- shaped plate member, which is arranged on an outer side of the winding frame 144 away from the winding disc 142 along the length direction of the frame 110. The plurality of winding members 1443 are evenly distributed around the center of the winding frame 1441 in the circumferential direction. A short side of each of the winding members 1443 is fixed on the winding frame 1441. A long side of each of the winding members 1443 is provided with at least one fourth yarn guide hole 14431, which is arranged corresponding to the first yarn guide hole 1422, the second yarn guide hole 14311, and the third yarn guide hole 14421.

The winding disc 142, the yarn guide assembly 143, and the winding claw 144 are all provided with yarn guide holes corresponding to each other, that is, the first yarn guide holes 1422 in the winding disc 142, the second yarn guide holes 14311 in the yarn guide assembly 143, the third yarn guide holes 14421 in the winding rods 1442 and the fourth yarn guide holes 14431 in the winding members 1443 are arranged in a one-to-one correspondence, that is, the axes of each group of the first yarn guide hole 1422, the second yarn guide holes 14311, the third yarn guide hole 14421, and the fourth yarn guide hole 14431 are all located in a same axial plane of the core mold. The yarns pass through the yarn guide holes in the winding disc 142, the yarn guide assembly 143, and the winding claw 144 in sequence, that is, each strand of yarns passes through each group of corresponding first yarn guide hole 1422, second yarn guide holes 14311, third yarn guide hole 14421, and fourth yarn guide hole 14431 in sequence. When the winding motor 141 drives the winding device 140 to rotate, the yarns can be wound around the outer periphery of the core mold with an appropriate tension to ensure the product quality.

Each of the yarn guide holes is a ceramic through hole, that is, ceramic eyelets are arranged in the corresponding components. The ceramic eyelet has high hardness, strong wear resistance and long service life. The ceramic eyelets are generally made of precision ceramics, so that the ceramic eyelets have a smooth surface, which can allow the yarns to pass through smoothly without being damaged.

The winding disc 142, the yarn guide assembly 143 and the winding claw 144 are all provided with mounting holes corresponding to each other. The winding disc 142, the yarn guide assembly 143 and the winding claw 144 are fixedly connected by threading fasteners such as bolts and screws in the mounting holes or by a snap-fit connection, so that the winding disc 142, the yarn guide assembly 143 and the winding claw 144 can rotate synchronously around the core mold.

A plurality of routing members 146 are arranged obliquely on a side of the winding disc 142 close to the yarn guide assembly 143. The plurality of routing members 146 are used to guide the yarn passing through the first yarn guide hole 1422 to pass through the second yarn guide hole 14311, so as to prevent the yarn from directly passing through the first yarn guide hole 1422 into the second yarn guide hole 14311, thereby preventing the yarn from being worn or broken due to excessive bending. The plurality of routing members 146 are evenly distributed on inner sides of the plurality of first yarn guide holes 1422 around the winding through hole 1421 in the circumferential direction, and are arranged corresponding to the first yarn guide hole 1422 and the second yarn guide hole 14311. The routing member 146 includes a routing frame 1461 and a plurality of routing rods 1462. The routing frame 1461 has a C-shaped structure, and is formed by connecting two side plates and a bottom plate. The two side plates extend in the same direction away from the bottom plate. An end of the routing member 1461 is fixed on the winding disc 142, and another end of the routing member 1461 is a free end extending in a direction toward the second yarn guide hole 14311. The routing rod 1462 is a cylindrical rod member, and four routing rods 1462 are arranged at intervals between the two side plates of the routing frame 1461 and are perpendicular to the side plates. After the yarn passes through the first yarn guide hole 1422, the yarn enters a gap between the four routing rods 1462 and the bottom plate of the routing frame 1461 from a fixed end of the routing member 146; or the yarn sequentially and alternately passes through the plurality of routing rods 1462 from the fixed end of the routing member 146, and then the yarn passes through the free end of the routing member 146 and enters the second yarn guide hole 14311. In this way, the smooth passing of the yarn is achieved.

The winding device 140 further includes a winding glue impregnating tank 147 for containing resin glue. The winding glue impregnating tank 147 is located below the winding claw 144, and a lower half of the winding claw 144 is located in the winding glue impregnating tank 147. The winding glue impregnating tank 147 has an arc-shaped groove structure, which matches the shape of the winding claw 144, so that the winding claw 144 can rotate smoothly in the winding glue impregnating tank 147, that is, a bottom plate of the winding glue impregnating tank 147 is an arc plate, and a curvature of the arc plate matches an arc shape formed by the free ends of the plurality of winding rods 1442 on the winding claw 144, so that the yarns on the winding claw 144 can be fully impregnated by a small amount of resin glue, thereby improving an utilization rate of the resin glue and avoiding waste. A solenoid valve 1471 is provided on the bottom of the winding glue impregnating tank 147 to regularly replace the resin glue in the winding glue impregnating tank 147, so as to avoid a degradation of product quality caused by an aging of the resin glue. Replacing the resin glue through the solenoid valve 1471 is easy to operate and highly efficient. The winding glue impregnating tank 147 also has a constant temperature heating function, which is not described in detail.

A threading path of the yarns for the winding device 140 is as follows. The yarn of the yarn roll in each of yarn drums 145 is passed through a corresponding first yarn guide hole 1422, and then the yarn is passed through the gap between the four routing rods 1462 and the bottom plate of the routing frame 1461 from the fixed end of the corresponding routing member 146 and is passed through the free end of the routing member 146, and then the yarn is passed through the corresponding second yarn guide hole 14311 in the yarn guide plate 1431 close to the winding disc 142, the corresponding second yarn guide hole 14311 in the yarn guide plate 1431 away from the winding disc 142, the third yarn guide hole 14421 in the corresponding winding rod 1442, and the fourth yarn guide hole 14431 in the corresponding winding member 1443, in sequence. When the winding device 140 is in operation, the winding motor 141 drives the winding device 140 to rotate, so that the yarns passing through the winding device 140 by the above-mentioned threading path continue to move and are finally wound around the outer periphery of the core mold. The winding disc 142, the yarn guide assembly 143 and the winding claw 144 cooperate with each other to increase a tension of the yarn, which avoids the yarn from loosening and shifting due to insufficient tension when the yarn is wound around the outer periphery of the core mold, thereby affecting the product quality.

In this embodiment, the winding disc 142 is provided with sixteen yarn drums 145, of which eight yarn drums 145 are evenly distributed on an inner side of the winding disc 142 around the winding through hole 1421 in the circumferential direction, and another eight yarn drums 145 are evenly distributed on an outer side of the winding disc 142 in the circumferential direction. The yarn drums 145 on the inner and outer sides of the winding disc 142 are arranged alternately, that is, lines between the centers of the sixteen yarn drums 145 and a center of the winding disc 142 can divide the winding disc 142 into sixteen equal parts. Correspondingly, the winding disc 142 is provided with sixteen first yarn guide holes 1422 and sixteen routing members 146. Each yarn guide plate 1431 is provided with sixteen second yarn guide holes 14311. The winding claw 144 is provided with sixteen winding rods 1442 and sixteen winding members 1443. Each winding rod 1442 is provided with three third yarn guide holes 14421 in sequence along a length direction of the winding rod 1442. Each winding member 1443 is provided with two fourth yarn guide holes 14431 in sequence along a length direction of the winding member 1443. The sixteen groups of first yarn guide holes 1422, second yarn guide holes 14311, third yarn guide holes 14421, and fourth yarn guide holes 14431 are arranged correspondingly.

In this embodiment, each group of yarn guide holes includes one first yarn guide hole 1422, two second yarn guide holes 14311, three third yarn guide holes 14421, and two fourth yarn guide holes 14431. Each strand of yarns sequentially passes through the first yarn guide hole 1422, the routing member 146, the two second yarn guide holes 14311, any one or more third yarn guide holes 14421, and any one or more fourth yarn guide holes 14431 in each group of yarn guide holes, and then is wound around the outer periphery of the core mold, so that all yarns have consistent winding tension and are evenly wound around the outer periphery of the core mold.

In this embodiment, the winding forming device 100 includes two winding devices 140, the two winding devices 140 are arranged opposite to each other along the length direction of the frame, and two winding motors 141 respectively drive the two winding devices 140 to rotate in opposite directions, thereby realizing a bidirectional winding of the yarns. The two winding devices 140 are provided for the bidirectional winding, so that two layers of annular structures with the same winding angles and opposite directions can be formed on the outer periphery of the core mold, thereby improving the circumferential strength of the product. Of course, two winding motors 141 can also be provided to drive the two winding devices 140 to wind in the same directions, and two layers of annular structures with the same winding angles and directions can be formed on the outer periphery of the core mold in sequence, which can be adjusted according to the specific product design. When the yarn winding angle is less than 85°, the yarn winding angle design has a greater impact on the mechanical properties of the product, and generally two winding devices 140 need to be provided for the bidirectional winding to make the yarn layers have a symmetrical structure and a reasonable force distribution. When the yarn winding angle is greater than or equal to 85°, the yarn winding angle design has a less impact on the mechanical properties of the product, and thus, the yarn winding angle can be approximately considered to be 90°. In this case, regardless of whether two winding devices 140 are provided for the bidirectional winding or a codirectional winding, the annular structure of the product finally formed can be considered to be approximately the same. For the same winding device 140, the winding claw 144 and the yarn drum 145 are respectively located on two side disc surfaces of the winding disc 142, the two winding devices 140 are arranged opposite to each other, that is, the yarn drums 145 on the two winding discs 142 are arranged facing each other, and the winding claws 144 of the two winding devices 140 are arranged opposite to each other. On the one hand, the yarn drums 145 on the two winding discs 142 are arranged facing each other, so that an operator located between the two winding discs 142 can replace the yarn rolls on the two winding discs 142, resulting in high operational efficiency. On the other hand, when the winding angle of the yarn is greater than or equal to 85°, the winding claws 144 of the two winding devices 140 are arranged opposite to each other, which can provide sufficient space for the two winding devices 140 to successively wind the yarns around the outer periphery of the core mold, so that the two winding devices 140 can alternately replace yarns without stopping when performing the bidirectional winding or the codirectional winding, that is, when one of the winding devices 140 stops to replace the yarn, another winding device 140 is set by doubling the winding speed, so that the product can be produced with the same wall thickness. When one of the winding devices 140 finishes the yarn replacing operation, the above operation is repeated to perform the yarn replacing operation for the other winding device 140, thereby achieving an uninterrupted production of the product and improving production efficiency. In other embodiments, one or three winding devices may be provided, which could be designed according to the product structure requirements without specific limitations.

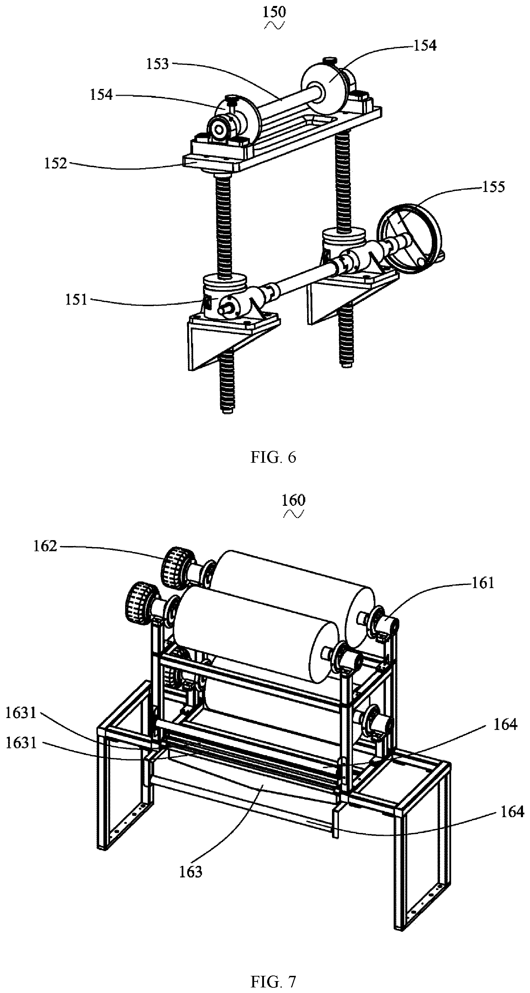

Referring to FIG. 1 and FIG. 6, the winding forming device 100 further includes a plurality of height-adjustable supporting devices 150, which are arranged below the core mold along the width direction of the frame 110. The plurality of supporting devices 150 are distributed in parallel along the length direction of the frame 110, and can support the core mold during mounting and disassembly of the core mold, and assist the core mold in smoothly threading into and removing from the winding device 140, which is easy to operate and has high working efficiency.

The supporting device 150 is a worm screw elevator, including a transmission frame 151, a moving frame 152, a supporting rod 153, two supporting auxiliary members154 and a hand wheel 155. The transmission frame 151 is fixed on the frame 110 along the width direction of the frame 110. The moving frame 152 is connected to the transmission frame 151 through a screw rod, so that the moving frame 152 is movable along an axial direction of the screw rod, that is, in a vertical direction. The supporting rod 153 is a rod with a circular cross-section, and is fixed on the moving frame 152 along the width direction of the frame 110 for supporting the core mold. The two supporting auxiliary members 154 are formed as truncated cone structures, are movably connected to and coaxially arranged with the supporting rod 153, and are used to assist in supporting the core mold. The smaller bottom surfaces of the two supporting auxiliary members 154 are arranged facing each other, so that the two supporting auxiliary members 154 are arranged facing each other to form a V-shaped opening. Since the core mold is generally formed as a cylindrical structure, the V-shaped opening allows the core mold to be stuck by the two supporting auxiliary members 154 when the core mold is placed on the supporting rod 153. As a result, the core mold is less prone to slipping due to rolling. The hand wheel 155 is connected to the transmission frame 151 through a connecting rod, and a gear in the transmission frame 151 can be controlled to rotate by rotating the hand wheel 155, so as to drive the screw rod to rise or fall, thereby controlling the moving frame 152 to move up and down in the vertical direction.

The supporting auxiliary member 154 is made of nylon material, which has a high mechanical strength, a good toughness, a smooth surface, and a low friction coefficient, and could not cause damage to the surface of the core mold.

In this embodiment, four supporting devices 150 are provided and are distributed in parallel along the length direction of the frame 110, two supporting devices 150 are located between the core mold fixing device 130 and the winding device 140 close to the core mold fixing device 130, one supporting device 150 is located on a side of another winding device 140 away from the core mold fixing device 130, and one supporting device 150 is located between the two winding devices 140.

When mounting the core mold, a height of the support rods 153 of the plurality of support devices 150 is adjusted to be slightly greater than a height of the lowest point of the winding through hole 1421, so that the core mold can smoothly pass through the winding through hole 1421. In this case, an end of the core mold is lifted by a crane to the support device 150 farthest from the core mold fixing device 130, and the core mold is slowly pushed to pass through the winding device 140 far away from the core mold fixing device 130, the support device 150, the winding device 140 close to the core mold fixing device 130, the two support devices 150, and the core mold fixing device 130 in sequence, and then the core mold is fixed on the core mold fixing device 130. After the core mold is fixed, the height of the support rods 153 of the plurality of support devices 150 is adjusted to be lower than the height of the lowest point of the core mold, so that the support devices 150 cannot affect the production of the product. The operation for disassembling the core mold is similar, and is not repeated here. Compared with conventional methods of directly lifting the core mold, the core mold is erected on the supporting devices 150 when it is threaded into and removed from the winding device, which is easier to operate and more efficient.

Referring to FIG. 1 and FIG. 7, the winding forming device 100 further includes a felt laying device 160, which is fixed on the first frame 111 and located above the core mold fixing device 130. The felt laying device 160 includes a plurality of felt-hanging racks 161, a tensioner 162, a felt roll impregnating tank 163, a plurality of felt-moving rods 164, and a felt guide (not shown). The plurality of felt-hanging racks 161 are fixed on the first frame 111 along the width direction of the frame 110 for placing felt rolls. The tensioner 162 is connected to an end of the felt-hanging rack 161 for increasing a tension of the felt cloth. The felt roll impregnating tank 163 is fixed on the first frame 111 along the width direction of the frame 110 and is located below the felt-hanging rack 161 for accommodating resin glue for impregnating the felt cloth. The felt roll impregnating tank 163 is provided with two scraping plates 1631 along the width direction of the frame 110. A gap is formed between the two scraping plates 1631 for passing through the felt cloth and scraping excess resin glue from the felt cloth back to the felt roll impregnating tank 163 to avoid waste. The rest of structure of the felt roll impregnating tank 163 is similar to that of the winding glue impregnating tank 147, and is not repeated here. Three felt-moving rods 164 are fixed on the first frame 111 along the width direction of the frame 110 and are distributed in parallel. One of the three felt-moving rods 164 is located in the felt roll impregnating tank 163 and has a gap with a bottom plate of the felt roll impregnating tank 163, and the felt cloth is threaded into the gap to be impregnated with resin glue, so that the felt cloth can be kept on the bottom of the felt roll impregnating tank 163 to ensure an impregnation effect of the felt cloth. Another two felt-moving rods 164 are respectively located above and below the above-mentioned felt-moving rod 164 to increase the tension of the felt cloth. The felt guide is fixed on the frame 110 and located above the core mold to make the felt cloth cylindrically wrapped around the outer periphery of the core mold.

When the felt laying device 160 is in operation, after lowering the felt cloth from the felt-hanging rack 161, firstly, the felt cloth passes through the gap between the felt roll impregnating tank 163 and the felt-moving rod 164 located above the felt roll impregnating tank 163, and then, the felt cloth passes through a gap between the two scraping plates 1631, a topmost felt-moving rod 164, and a bottommost felt-moving rod 164 in sequence, and finally, the felt cloth is guided by the felt guide to form a cylindrical shape and be wrapped around the outer periphery of the core mold. In this embodiment, three felt-hanging racks 161 are provided, and three felt-moving rods 164 are provided. In other embodiments, the numbers and positions of the felt-hanging racks and the felt-moving rods can be designed according to process requirements without specific limitations.

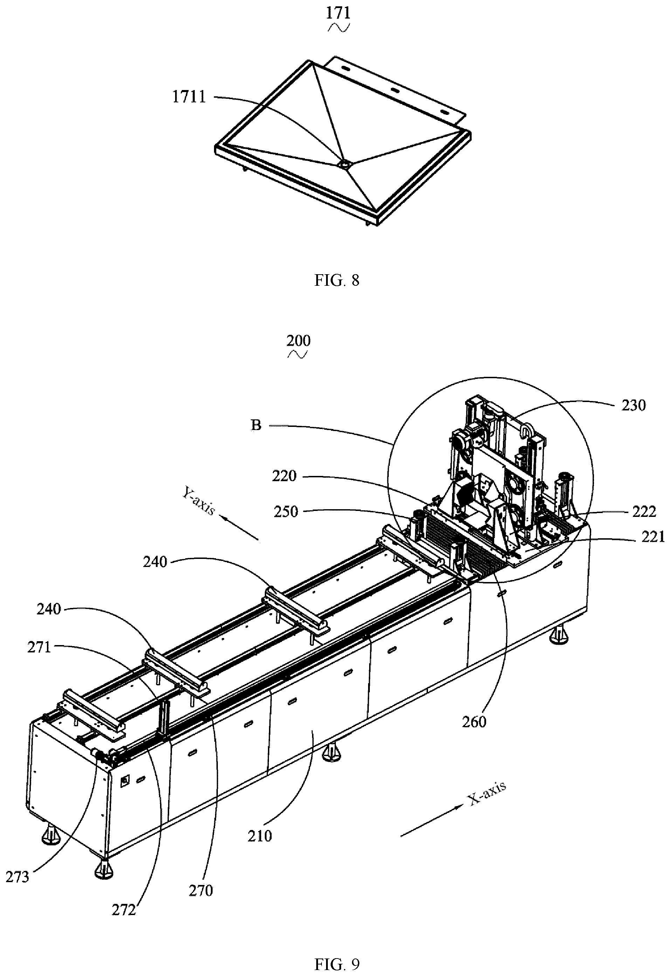

Referring to FIG. 1 and FIG. 8, the winding forming device 100 further includes a glue recovery device 170, which includes a plurality of glue recovery tanks 171 and a plurality of glue recovery boxes. The plurality of glue recovery tanks 171 are horizontally arranged on the frame 110 along the length direction of the frame 110, and are all located below the yarn movement path. A bottom of the glue recovery tank 171 is provided with a recovery hole 1711, which is connected to the glue recovery box. The plurality of glue recovery tanks 171 are arranged below the yarn movement path, so that the resin glue dripping from various parts during a preforming process can be recovered separately with high efficiency, which effectively avoids an aging failure problem of the resin glue caused by a long flow path and a long exposure to air, and improves a recovery rate of the resin glue.

The glue recovery tank 171 has a conical structure, for example, a triangular cone, a quadrangular cone or a circular cone, and is made of stainless-steel sheets connected by welding or integral molding, and the recovery hole 1711 is provided in the bottom of the glue recovery tank 171. The conical structure allows the dripping resin glue to flow into the recovery hole 1711 along a side wall of the glue recovery tank 171, and then flow into the glue recovery box through a pipeline, thereby realizing a rapid recovery of the resin glue.

On the yarn movement path, the distance between some structures of the winding forming device 100 is long, it is not convenient to arrange the glue recovery tank 171, so a plurality of glue return plates 172 are provided. An end of a part of the glue return plates 172 is connected to the glue impregnating device 120, and another end of the part of the glue return plates 172 is connected to the glue recovery tank 171, and thus, the dripping resin glue can quickly return to the glue impregnating device 120 along these glue return plates 172. Two ends of another part of the glue return plates 172 are respectively connected to two glue recovery tanks 171, the dripping resin glue can quickly flow to the glue recovery tanks 171 along these glue return plates 172, and then flow into the glue recovery box. The plurality of glue return plates 172 cooperate with the plurality of glue recovery tanks 171 to realize a rapid recovery of the resin glue in the entire yarn movement path.

When the resin glue in the glue recovery box reaches a certain volume, the resin glue can be pumped back to each glue impregnating tank through a glue pump for impregnating the yarn, thereby realizing a recycling-reuse of the resin glue.

Referring to FIG. 9, the cutting device 200 includes a base 210, a traveling mechanism 220 arranged on the base 210 and movable along a length direction of the base 210, a cutting mechanism 230 mounted on the traveling mechanism 220 for cutting the pultrusion-winding product, and a plurality of supporting mechanisms 240 distributed on the base 210 at intervals along the length direction of the base 210. The traveling mechanism 220 includes a bottom plate 221 and a clamping mechanism 222 arranged on the bottom plate 221. The clamping mechanism 222 is used to clamp the product, so that the traveling mechanism 220 moves synchronously with the product, and the cutting mechanism 230 can also move synchronously with the pultrusion-winding product. Therefore, the cutting mechanism 230 and the pultrusion-winding product remain relatively still during cutting, thereby improving cutting surface quality and working efficiency, and reducing material waste.

For ease of description, in a horizontal plane where the base 210 is arranged, a length direction of the base 210 is defined as an X-axis, which is the same direction as an axial direction of the pultrusion-winding product and a forming forward direction. A direction perpendicular to the X-axis in the horizontal plane is defined as a Y-axis, that is, a width direction of the base 210.

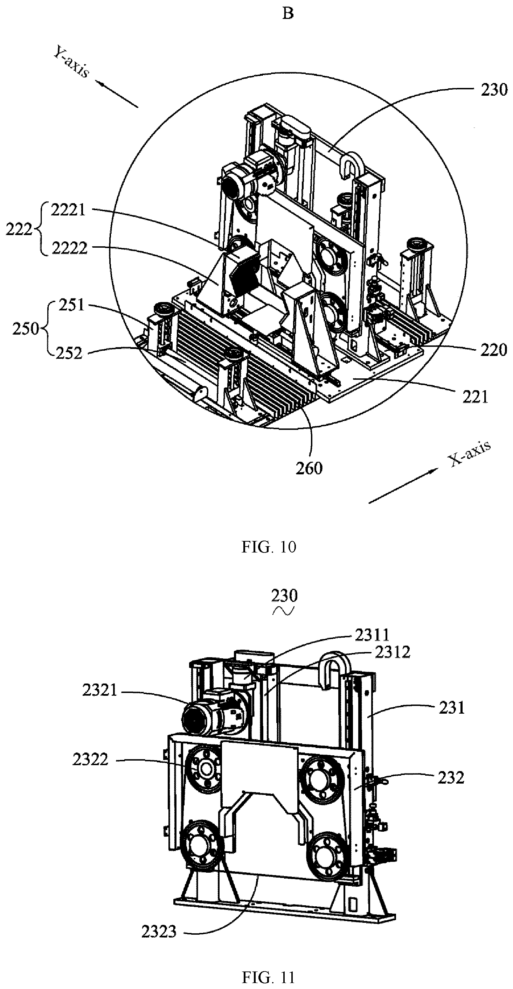

Referring to FIG. 9 and FIG. 10, the traveling mechanism 220 includes a bottom plate 221 and a clamping mechanism 222 arranged on the bottom plate 221. A slide rail is arranged on the base 210 along the X-axis direction, and a slider is correspondingly arranged on the bottom plate 221, so that the bottom plate 221 is movable on the base 210 along the X-axis direction.

The clamping mechanism 222 includes two claws 2221 and two claw supporting frames 2222. The two claw supporting frames 2222 are arranged on the bottom plate 221 facing each other along the Y-axis direction. The two claws 2221 are respectively located on two sides of the two claw supporting frames 2222 facing each other, so that the two claws 2221 are also arranged facing each other along the Y-axis direction. Therefore, when the two claw supporting frames 2222 move back and forth along the Y-axis, they can clamp or release the pultrusion-winding product, and the clamping mechanism 222 applies the same force to both sides of the pultrusion-winding product when clamping the pultrusion-winding product, thereby avoiding a deviation of the pultrusion-winding product.

The claw 2221 is detachably fixed on the claw supporting frame 2222, and specifically, the claw 2221 can be connected by fasteners or snap-fit connections. The claws with different specifications can be replaced according to the pultrusion-winding products with different specifications (mainly, an outer diameter of the pultrusion-winding products), thereby improving the applicability of equipment. The claw 2221 is formed as a V-shape and can be adapted to the pultrusion-winding products with different specifications and sizes within a certain range. When the size of the pultrusion-winding product changes within a small range, the claw 2221 can be applied without replacement, thereby improving work efficiency.

A slide rail is arranged on the bottom plate 221 along the Y-axis direction, and a slider is correspondingly arranged on the claw supporting frame 2222, so that the claw supporting frame 2222 can move back and forth on the bottom plate 221 along the Y-axis direction. The bottom plate 221 is provided with a clamping cylinder, and the clamping cylinder drives the two claw supporting frames 2222 to move towards each other, so that the two claws 2221 clamp the pultrusion-winding product; and the clamping cylinder drives the two claw supporting frames 2222 to move away from each other, so that the two claws 2221 release the pultrusion-winding product.

In this embodiment, two clamping mechanisms 222 are arranged at intervals along the X-axis direction on the bottom plate 221, and the two clamping mechanisms 222 are respectively located on both sides of the cutting mechanism 230, so that the clamping for the pultrusion-winding product during cutting can be more stable, and the problems of burrs and delamination on a cutting surface caused by shaking of the pultrusion-winding product during cutting can be avoided. Furthermore, the arrangement of the two clamping mechanisms 222 increases a contact area between the traveling mechanism 220 and the pultrusion-winding product, and thus, increases a friction force, so that the traveling mechanism 220 can more stably follow the movement of the pultrusion-winding product, avoiding a following failure of the traveling mechanism 220 due to insufficient clamping force. Furthermore, the clamping mechanism 222, which is secondly passed through by the pultrusion-winding product along the forming forward direction, can clamp the cut pultrusion-winding product after cutting pultrusion-winding product, and drive the cut pultrusion-winding product to move as the subsequent traveling mechanism 220 continues to move. Therefore, the following situation can be avoided, that is, if the cut pultrusion-winding product is not immediately taken away after cutting, the cutting mechanism 230 may damage the cut pultrusion-winding product.

In conjunction with FIG. 9 and FIG. 11, the cutting mechanism 230 includes a moving frame 231 and a cutting frame 232. The moving frame 231 is vertically arranged on the bottom plate 221, and the cutting frame 232 is arranged on the moving frame 231. The moving frame 231 drives the cutting frame 232 to move in the vertical direction. The cutting frame 232 is provided with a cutting motor 2321 and at least two guide wheels 2322. A diamond wire 2323 is tensioned and arranged on an outer periphery of at least two guide wheels 2322. The cutting motor 2321 drives the guide wheels 2322 to rotate, thereby driving the diamond wire 2323 to rotate. The moving frame 231 has a frame structure, which is arranged across the base 210, and the pultrusion-winding product is passed through and is movable inside the moving frame 231. In this embodiment, the vertical direction refers to a direction perpendicular to a horizontal plane where the X-axis and the Y-axis are located, so that a cut end face of the pultrusion-winding product is perpendicular to an axial direction of the pultrusion-winding product, and the cut end face is flat and does not need to be processed again, thereby avoiding waste.

In this embodiment, the cutting frame 232 is a rectangular plate. Four guide wheels 2322 are arranged on a plate surface of a side of the cutting frame 232 away from the moving frame 231, and the four guide wheels 2322 are distributed at four corners of the cutting frame 232. A straight line where axis centers of two guide wheels 2322 away from the bottom plate 221 and a straight line where axis centers of two guide wheels 2322 close to the bottom plate 221 are parallel to each other and to a plane where the bottom plate 221 is located, that is, parallel to the horizontal plane. In this case, a part of the diamond wire 2323 used for cutting the pultrusion-winding product is located on the horizontal plane, that is, lines connecting the axis centers of the four guide wheels 2322 form a parallelogram or a trapezoid, so as to achieve a horizontal and stable cutting. The cutting frame 232 is further provided with a cavity for accommodating the pultrusion-winding product. When the cutting frame 232 moves downward on the moving frame 231 for cutting, the pultrusion-winding product behind a cutting position can be accommodated in the cavity without interfering with a cutting operation. Replacing conventional cutting blades with the diamond wire 2323 has the beneficial effects, including less noise, less dust, easy mounting and replacement, faster cutting speed, lower cost, and longer service life due to a high hardness and strong wear resistance of diamond. Further, the diamond wire 2323 causes less damage to the cutting surface than the conventional cutting blades, which is beneficial to reduce material loss.

In one embodiment, at least one guide wheel 2322 is fixed on the cutting frame 232 by a guide wheel cylinder, which can drive the guide wheel 2322 to move to tighten or loosen the diamond wire 2323, so as to facilitate the mounting and replacement of the diamond wire 2323. One of the guide wheels 2322 is slidably arranged on the cutting frame 232, and the guide wheel cylinder is fixed on the cutting frame 232, a piston rod of the guide wheel cylinder is fixed to the guide wheel 2322, and the guide wheel cylinder drives the guide wheel 2322 to move on the cutting frame 232 through the piston rod to tighten or loosen the diamond wire 2323. The moving direction of the guide wheel 2322 is not limited, as long as the tensioning or loosening of the diamond wire 2323 can be controlled. A slider is arranged on a side of the guide wheel 2322 connected to the cutting frame 232, and a sliding rail/sliding groove is correspondingly arranged on the cutting frame 232, so that the guide wheel 2322 is slidable on the cutting frame 232. The piston rod of the guide wheel cylinder can be telescopically moved to drive the guide wheel 2322 to move on the cutting frame 232, so as to control the tensioning or loosening of the diamond wire 2323. When a tensioning force of the diamond wire 2323 is moderate, the piston rod of the guide wheel cylinder is controlled to remain stationary at the corresponding position to keep the diamond wire 2323 in a tensioned state for cutting.

A slider is arranged on a side of the cutting frame 232 facing away from the guide wheel 2322, and a corresponding sliding rail is arranged on the moving frame 231 in the vertical direction, so that the cutting frame 232 is movable in the vertical direction on the moving frame 231. The moving frame 231 is provided with a moving motor 2311 and a screw rod 2312 arranged in the vertical direction. The screw rod 2312 is fixed to the cutting frame 232 through a screw rod nut (not shown). The moving motor 2311 drives the screw rod 2312 to rotate, driving the screw rod nut and the cutting frame 232 to move in the vertical direction on the moving frame 231.

In this embodiment, the cutting motor 2321 is a high-speed motor. By adjusting the frequency and pulse, a rotation speed of the guide wheel 2322 can meet a linear speed requirement for cutting. Furthermore, the high-speed motor has a small size, high transmission efficiency, low noise, and fast dynamic response. The moving motor 2311 is a servo motor. Through a pulse adjustment, a moving speed of the cutting frame 232 can meet a feed speed requirement for cutting.

The bottom plate 221 is further provided with a cylinder (not shown), which can drive the bottom plate 221 to move along the X-axis direction on the base 210, and is used to drive the traveling mechanism 220 to return to its original position after cutting, in order to wait for the next cutting, so that the traveling mechanism 220 can reciprocate within a cutting stroke range to achieve a continuous cutting of the pultrusion-winding product. In addition, the cylinder can further drive the traveling mechanism 220 to continue to move along the forming forward direction of the pultrusion-winding product, after cutting a previous pultrusion-winding product, so as to avoid that the cutting frame 232 cuts a next pultrusion-winding product that does not reach a cutting length during the process of returning the cutting frame 232 to its original position, and thus, avoiding the material waste and the consumption of the service life of the diamond wire 2323.

In conjunction with FIG. 9 and FIG. 10, the cutting device 200 further includes an accordion cover 260, and two ends of the accordion cover 260 are respectively connected to the traveling mechanism 220 and the supporting mechanism 240, which can prevent dust generated by cutting from falling into the base 210, avoid affecting other equipment such as the motor, and extend the service life of other equipment.

A plurality of supporting mechanisms 240 are provided and are distributed along the X-axis at intervals on the base 210. The supporting mechanisms 240 are provided with a roller for supporting the pultrusion-winding product without damaging the pultrusion-winding product. An axial direction of the roller is parallel to the Y-axis.

In an embodiment, the base 210 is further provided with an adjustable supporting mechanism 250, which is arranged adjacent to the traveling mechanism 220, and can adjust a supporting position of the pultrusion-winding product in the vertical direction. In order to avoid an inclination of a cutting surface caused by a sagging of the pultrusion-winding product due to gravity, it is necessary to support the pultrusion-winding product so that a part of the pultrusion-winding product near its cutting surface remains horizontal. Therefore, the adjustable supporting mechanism 250 supports a part of the pultrusion-winding product near the cutting surface, which requires high precision. The supporting mechanism 240 mainly supports a part of the pultrusion-winding product far from the cutting surface, which does not require the high precision, as long as it can achieve support. A combination of the adjustable supporting mechanism 250 and the supporting mechanism 240 can save costs while ensuring precision.

As shown in FIG. 10, the adjustable supporting mechanism 250 includes two supporting frames 251 and one roller 252. The two supporting frames 251 are arranged on the base 210 facing each other along the Y-axis direction. The supporting frame 251 is provided with a screw rod and a hand wheel. The hand wheel controls a rotation of the screw rod, thereby driving a screw rod nut to move up and down in the vertical direction. Two ends of the roller 252 are respectively fixed to the screw rod nuts on the two supporting frames 251. A movement of the screw rod nut can drive the roller 252 to move up and down. In this embodiment, two adjustable supporting mechanisms 250 are provided, and are respectively located on two sides of the traveling mechanism 220 along the X-axis, so as to stably support the pultrusion-winding product. An end of the accordion cover 260 is connected to the adjustable supporting mechanism 250, and another end is connected to the traveling mechanism 220.

As shown in FIG. 9, the base 210 is further provided with a measuring mechanism 270, including a bracket 271 and a sensor (not shown) arranged on the bracket 271. The sensor is used to detect a position signal of the pultrusion-winding product and transmit the position signal to the traveling mechanism 220 and the cutting mechanism 230, thereby controlling the traveling mechanism 220 to clamp the pultrusion-winding product and the cutting mechanism 230 to cut the pultrusion-winding product.

The measuring mechanism 270 further includes a synchronous belt 272, a synchronous wheel, and a measuring motor 273. The synchronous belt 272 is arranged on a side of the base 210 along the X-axis direction, the bracket 271 is located on the synchronous belt 272, and the measuring motor 273 drives the synchronous wheel to rotate for driving the synchronous belt 272 to move, and the bracket 271 can be moved to a certain position as needed, so that a distance between the bracket 271 and the diamond wire 2323 is equal to a required length of the pultrusion-winding product, allowing for the cutting of pultrusion-winding products with different lengths, thereby obtaining a wide application range. In addition, the measuring mechanism 270 can automatically measure the length of the pultrusion-winding product and transmit a signal to control the cutting process, so that the cutting process has high efficiency, low error, and good quality.

A plurality of yarns are placed on the yarn laying device, and after being led out of the yarn laying device, the plurality of yarns enter the glue impregnating device 120 in the winding forming device 100 to be impregnated with resin glue, and then enter the winding device 140. The winding forming device 100 is described in detail above and not repeated here.

The forming device includes a heating device, an outer mold, and a core mold. An end of the core mold is fixed on the core mold fixing device 130, and another end passes through two winding devices 140 in sequence and then enters a mold cavity of the outer mold. A tubular channel is formed between the core mold and the cavity wall of the mold cavity. The heating device is arranged outside the outer mold. The yarn is passed through the tubular channel, and is cured by heating to form a pultrusion-winding product.

The traction device includes two clamping-pulling mechanisms that can move forward alternately, and can pull the pultrusion-winding product within a certain distance to achieve continuous forming. The clamping-pulling mechanism includes a sliding claw slidably connected to the frame 110 and a moving claw that can move in the vertical direction. The sliding claw and the moving claw are arranged facing to each other. A hydraulic cylinder drives the moving claw to move downward, so that the sliding claw and the moving claw cooperate to clamp the pultrusion-winding product. The sliding claw slides on the frame 110, thereby driving the pultrusion-winding product clamped by the sliding claw and the moving claw to move synchronously.

The pultrusion-winding forming production line further includes a control system, which is used to control all process parameters in a pultrusion-winding forming process and feedback actual results. When the production line is running, in a synchronized state, the control system maintains a ratio of a set pulling speed of the pultrusion-winding product to a set winding speed of the pultrusion-winding product at a fixed ratio, so that a pullling speed and the winding speed match with each other to ensure the product quality. The pultrusion-winding forming production line is further provided with a plurality of sensors, which are used to measure an actual forward speed and an actual winding speed of the pultrusion-winding product. When a ratio between the actual forward speed and the actual winding speed of the pultrusion-winding product deviates from the set ratio, the control system can autonomously adjust the winding speed and issue a speed difference alarm to avoid problems such as yarn accumulation, mold blockage, and production line shutdown caused by mismatched pulling speed and winding speed.

In another embodiment, a pultrusion-winding forming method is provided, and can be applied in the above-mentioned pultrusion-winding forming production line, specifically, the pultrusion-winding forming method includes the following steps.

In step S101, after being impregnated with a resin glue, a plurality of yarns are pultruded and wound outside the core mold to form an axial layer and a winding layer, so as to obtain a preform for a pultrusion-winding product.

Prior to this step, the core mold is supported by the supporting device 150, and the core mold is threaded into the winding device 140 and fixed on the core mold fixing device 130, waiting for subsequent production.

In this step, the preform is prepared by the winding forming device100. Firstly, an inner axial layer is formed by pultruding outside the core mold. A plurality of yarns led out of the yarn laying device are introduced into a glue impregnating tank 124 of a glue impregnating device 120 through a yarn collecting plate 122 to be impregnated with resin glue, and then the plurality of yarns are divided into two sets of yarns through two yarn dividing plates 123, and then the two sets of yarns bypass the core mold fixing device 130, gradually approach the core mold from two sides of the core mold, and wrap around outside the core mold, so as to form the inner axial layer by pultruding.

Then, a winding layer is formed by winding the yarns outside the inner axial layer, and the preform of the pultrusion-winding product is obtained. The plurality of yarns in the yarn drums 145 of the winding device 140 are led out from the first yarn guide holes 1422, and are passed through the routing members 146, the second yarn guide holes 14311 on the yarn guide plates 1431, and the third yarn guide holes 14421 on the winding rods 1442 in sequence, and then are impregnated with the resin glue in the winding glue impregnating tank 147, and then are passed through the fourth yarn guide holes 14431 on the winding members 1443. The winding motor 141 drives the winding device 140 to rotate, so that the yarns passed through the winding device 140 continue to move, and the yarns are wound outside the inner axial layer to form the winding layer to obtain a preform. One or two winding devices 140 can be selected according to specific needs without specific restrictions.

In this embodiment, the temperature of the resin glue in the glue impregnating tank 124 and the winding glue impregnating tank 147 is in a range from 30°C to 40°C. In other embodiments, the corresponding temperature can be set according to the type of the resin glue without specific limitations.

In this embodiment, a winding angle of the winding layer is in a range from 45° to 90°, and a winding speed of the winding layer is in a range from 1r/min to 12r/min, which is conducive to processing and can improve efficiency. This is mainly because a winding process with the winding angle less than 45° belongs to small-angle winding, which is difficult to process and has low efficiency. In this case, the winding speed needs to be reduced to keep matching with the pulling speed, and if the winding speed is too low, it may cause pauses and other issues, affecting the forming process.

In an application scenario, the pultrusion-winding product may be further provided with an outer axial layer. The method further includes a step S10 after the step S101. In the step S10, an outer axial layer is formed by pultruding outside the winding layer, so as to obtain the preform. The specific process is similar to the step of forming the inner axial layer by pultruding in the step S101, which is not repeated here.

In another application scenario, the pultrusion-winding product may be further provided with a lining layer. The method further includes a step S11 before the step S101, and in the step S11, a lining layer is formed by wrapping a felt cloth around outside the core mold. A felt cloth on the felt laying device 160 is impregnated with the resin glue in the felt roll impregnating tank 163, and then the felt cloth is guided by the felt guide to form a cylindrical shape and be wrapped around the outer periphery of the core mold, so as to form the lining layer.

In another application scenario, the pultrusion-winding product may be further provided with an outer felt layer. The method further includes a step S12 after the step S101, and in the step S12, an outer felt layer is formed by wrapping a felt cloth around outside the winding layer, so as to obtain the preform. A felt cloth on the felt laying device 160 is impregnated with the resin glue in the felt roll impregnating tank 163, and then the felt cloth is guided by the felt guide to form a cylindrical shape and be wrapped around the outer periphery of the winding layer, so as to form the outer felt layer.

In an application scenario, the pultrusion-winding product may be further provided with the lining layer, the outer axial layer, and the outer felt layer. That is, the method further includes the step S11 before the step S101; and the steps S10 and S12 in sequence after the step S101, which are not repeated here.

In this step, when the pulling speed and the winding speed do not match, the control system can autonomously adjust the winding speed and issue a speed difference alarm, which is described above and not repeated here.

In step S102, the preform is cured at high temperature to form a pultrusion-winding product, the pultrusion-winding product is pulled to move along a forming forward direction of the pultrusion-winding product, so as to continuously form the pultrusion-winding product.

The preform is fed into a forming device, which is provided with a heating zone, a forming zone, and a post-curing zone along the forming forward direction. In this step, the preform passes through the heating zone, the forming zone, and the post-curing zone in sequence for curing and forming. That is, the yarn impregnated with the resin glue passes through the heating zone, the forming zone, and the post-curing zone in sequence in a tubular channel between the core mold and the outer mold, so that the yarn is cured at high temperature to form the pultrusion-winding product.

A temperature of the heating zone is in a range from 100°C to 140°C, a temperature of the forming zone is in a range from 140°C to 180°C, and a temperature of the post-curing zone is in a range from 180°C to 200°C. The temperature of the heating zone can be any value in the range from 100°C to 140°C, and the temperatures of the forming zone and post-curing zone are also understood similarly and are not repeated here. The temperatures of the heating zone, the forming zone, and the post-curing zone increase gradually, so that after entering the forming device, the preform gradually heats up, until the preform is cured fully, thereby reducing product defects and ensuring product quality. In other embodiments, the forming device can be provided with four, five, or six heating zones to meet forming requirements of different products, and no specific limitations are made here.

Two clamping-pulling mechanisms of the pulling device move forward alternately and continuously pull the pultrusion-winding product, so that the yarn continuously enters the forming device, and the cured and formed product is continuously pulled out of the forming device and moves forward, so as to achieve uninterrupted production. In this embodiment, the pulling speed of the pulling device is in a range from 10mm/min to 100mm/min, and a suitable pulling speed can be selected within this range according to different product structures and process requirements to ensure product performance while improving production efficiency.

In step S103, a position signal of the pultrusion-winding product is detected and the pultrusion-winding product is cut according to a preset length.

Before this step, positions of the adjustable supporting mechanism 250 and the measuring mechanism 270 are adjusted. According to a size of the pultrusion-winding product, the hand wheel of the adjustable supporting mechanism 250 is manually rotated to adjust the position of the roller 252 and to support the pultrusion-winding product, ensuring that the pultrusion-winding product is in the same horizontal direction as the pulling force applied to it. According to the preset length of the pultrusion-winding product, the measuring mechanism 270 is adjusted, that is, the bracket 271 is driven to adjust the position through the measuring motor 273, so that the distance between the bracket 271 and the diamond wire 2323 is equal to the preset length.

After the adjustable supporting mechanism 250 and the measuring mechanism 270 are adjusted in place, when the pultrusion-winding product passes through the cutting mechanism 230 and when the distance between the end of the pultrusion-winding product and the cutting mechanism 230 is equal to the preset length, that is, the pultrusion-winding product passes through the adjustable supporting mechanism 250, the clamping mechanism 222, the cutting mechanism 230, the clamping mechanism 222, the adjustable supporting mechanism 250, and the plurality of supporting mechanisms 240 in sequence until the pultrusion-winding product moves to the bracket 271, the sensor on the bracket 271 detects the position signal of the pultrusion-winding product and sends the position signal to the clamping cylinder, and the clamping mechanism 222 clamps the pultrusion-winding product, so that the traveling mechanism 220 moves synchronously with the pultrusion-winding product.

The cutting mechanism 230 cuts the pultrusion-winding product. When the clamping mechanism 222 performs the clamping, the traveling mechanism 220 starts to move with the product. In this case, the cutting motor 2321 receives the signal sent by the traveling mechanism 220 and drives the guide wheels 2322 to rotate and drives the diamond wire 2323 to move. When the guide wheel 2322 reaches the set speed, the moving motor 2311 drives the cutting frame 232 to move in the vertical direction close to the pultrusion-winding product to perform the cutting.

After the cutting is completed, the traveling mechanism 220 continues to move along the forming forward direction of the pultrusion-winding product on the base 210 to drive the clamping mechanism 220 to clamp and move the cut pultrusion-winding product. After the traveling mechanism 220 moves in place, the clamping mechanism 222 loosens the cut pultrusion-winding product, so that the cut pultrusion-winding product is placed on the supporting mechanism 240 to wait for unloading. In other embodiments, the previous cut pultrusion-winding product can be supported only by the supporting mechanism to wait for unloading.

Finally, the cutting device 200 is reset, that is, the cutting mechanism 230 returns to an initial state and waits for the next cutting; and the traveling mechanism 220 returns to an initial position and waits for the next traveling.

The above description is only an implementation method of the present application, and does not limit the patent scope of the present application. Any equivalent structure or equivalent process transformation made using the contents of the present application specification and drawings, or directly or indirectly used in other related technical fields, are also included in the patent protection scope of the present application.

## Claims

1. A pultrusion-winding forming method for manufacturing a pultrusion-winding product, wherein the method comprises the following steps:
in step S101, after being impregnated with a resin glue, a plurality of yarns are pultruded and wound outside a core mold to form an axial layer and a winding layer, so as to obtain a preform for the pultrusion-winding product;
in step S102, the preform is cured at high temperature to form the pultrusion-winding product, the pultrusion-winding product is pulled to move along a forming forward direction of the pultrusion-winding product, so as to continuously form the pultrusion-winding product; and
in step S103, a position signal of the pultrusion-winding product is detected and the pultrusion-winding product is cut according to a preset length.

2. The method of claim 1, wherein in the step S101, an impregnating temperature of the resin glue is in a range from 30°C to 40°C.

3. The method of claim 1, wherein in the step S101, an inner axial layer is formed by pultruding outside the core mold, and the winding layer is formed by winding outside the inner axial layer.

4. The method of claim 1, wherein a winding angle of the winding layer is in a range from 45° to 90°.

5. The method of claim 1, wherein a winding speed of the winding layer is in a range from 1r/min to 12r/min.

6. The method of claim 1, wherein the method further comprises a step S10 after the step S101, and in the step S10, an outer axial layer is formed by pultruding outside the winding layer, so as to obtain the preform.

7. The method of claim 1, wherein the method further comprises a step S11 before the step S101, and in the step S11, a lining layer is formed by wrapping a felt cloth around outside the core mold; and/or
the method further comprises a step S12 after the step S101, and in the step S12, an outer felt layer is formed by wrapping a felt cloth around outside the winding layer, so as to obtain the preform.

8. The method of claim 1, wherein in the step S102, the preform is fed into a forming device for curing and forming, the forming device is provided with a heating zone, a forming zone, and a post-curing zone along the forming forward direction, and the preform passes through the heating zone, the forming zone, and the post-curing zone in sequence for curing and forming.

9. The method of claim 8, wherein a temperature of the heating zone is in a range from 100°C to 140°C, a temperature of the forming zone is in a range from 140°C to 180°C, and a temperature of the post-curing zone is in a range from 180°C to 200°C.

10. The method of claim 1, wherein in the step S102, a pulling speed is in a range from 10mm/min to 100mm/min.

11. The method of claim 1, wherein in the step S101, the preform is prepared by a winding forming device, and the winding forming device comprises: a frame, a glue impregnating device for impregnating the yarns, a core mold fixing device for fixing the core mold, and two winding devices for winding the yarns on the core mold, the glue impregnating device, the core mold fixing device, and the winding devices are arranged in sequence along a length direction of the frame, and the two winding devices are arranged opposite to each other along the length direction of the frame and rotatable in opposite directions, so as to realize a bidirectional winding of the yarns to form the winding layer.

12. The method of claim 11, wherein the winding forming device further comprises a plurality of height-adjustable supporting devices, which are arranged below the core mold along a width direction of the frame, before the step S101, the core mold is supported by the supporting devices, and the core mold is threaded into the winding devices and fixed on the core mold fixing device.
